# EUROPÄISCHE PATENTSCHRIFT

(11) **EP 0 891 072 B1**
(45) Veröffentlichungstag und Bekanntmachung des Hinweises auf die Patenterteilung: **15.10.2003**
(21) Anmeldenummer: 98108849.5
(22) Anmeldetag: 15.05.1998
(51) Int. Cl.: H04N 1/327

(54) **Verfahren zur Signalisierung von Diensten in Telefonnetzen mit analogen Teilnehmeranschlüssen**
Method for signalling services in telephone networks with analog subscriber connections
Procédé pour la signalisation de services dans des réseaux téléphoniques avec raccordements d'abonnés analogiques

(30) Priorität: 08.07.1997 DE 19729126
(43) Veröffentlichungstag der Anmeldung: 13.01.1999
(73) Patentinhaber: Deutsche Telekom AG, 53113 Bonn (DE)
(72) Erfinder: Schellhaas, Werner, 64372 Ober Ramstadt (DE); Braun, Peter, 64846 Gross-Zimmern (DE)

(56) Entgegenhaltungen:
- EP-A- 0 676 884
- DE-A- 4 447 241
- US-A- 4 383 138
- US-A- 4 551 581
- PATENT ABSTRACTS OF JAPAN vol. 1997, no. 09, 30. September 1997 (1997-09-30) & JP 09 116723 A (CANON INC), 2. Mai 1997 (1997-05-02)
- "DETECTING INCOMING VOICE, DATA, OF FAX TELEPHONE CALLS" IBM TECHNICAL DISCLOSURE BULLETIN,US,IBM CORP. NEW YORK, Bd. 38, Nr. 10, Seite 389-390 XP000540535 ISSN: 0018-8689

## Beschreibung

Die Erfindung betrifft ein Verfahren gemäß der im Oberbegriff des Patentanspruches 1 angegebenen Art.

In digitalen Telefonnetzen, z. B. im ISDN, ist es bei digitalen Teilnehmeranschlüssen möglich, bereits beim Aufbau einer Verbindung eine sogenannte Dienstekennung zu übertragen. Diese Dienstekennung (Bearer Capability [BC] oder Higher Layer Capability [HLC]) wird in einem besonderen Signalisierungskanal (D-Kanal), zusammen mit der Anrufsignalisierung, an das Telefonnetz und von diesem an den gerufenen Anschluss übermittelt und dort dazu verwendet, ein geeignetes Endgerät für die Entgegennahme des Anrufers auszuwählen. So werden z. B. bei Vorankündigung einer Fax-Übertragung ein für Fax-Empfang geeignetes Gerät, bei angekündigter Datenübertragung ein Datenmodem automatisch angeschaltet, ohne dass von einem am selben Teilnehmeranschluss betriebenen Telefon ein akustisches Signal ausgegeben wird.

Im analogen Bereich, wo kein Signalisierungskanal zur Verfügung steht, ist es bisher erst nach Verbindungsaufbau möglich, entsprechende Dienstekennungen in Form von Kennungstönen, die in regelmäßigen Abständen auf die Telefonleitung (a/b-Ader) ausgegeben werden, zu übertragen, wie dies z. B. bei Faxgeräten mit dem sogenannten CNG-Signal praktiziert wird. Da derartige Kennungstöne erst nach Annahme einer Verbindung empfangen werden können, ist eine gezielte Anschaltung eines entsprechenden Endgerätes, z. B. bei sogenannten aktiven Fax-Weichen, erst nach dem Zustandekommen einer gebührenpflichtigen Verbindung möglich. Dies hat zur Folge, dass eine Verbindung zu einem für unterschiedliche Dienste verwendeten Teilnehmeranschluss auch dann hergestellt wird und vom Anrufer bezahlt werden muss, wenn nur ein Telefongespräch beabsichtigt ist, aber, z. B. wegen Abwesenheit des Teilnehmers, nicht zustandekommt. Ältere, sogenannte manuelle Faxgeräte, die kein CNG-Signal ausgeben, werden von einer Gegenstelle überdies überhaupt nicht erkannt, und eine Übertragung setzt eine vorherige telefonische Absprache der Benutzer voraus.

Um die beschriebenen Nachteile zu beseitigen, wurde in der älteren Deutschen Patentanmeldung 196 15 304.2 (Anmeldetag 18.04.1996) bereits ein Verfahren vorgeschlagen, bei dem im Zusammenhang mit dem 25/50 Hz-Rufsignal die Übermittlung eines Tonsignales als Endgeräteerkennungssignal an den gerufenen Teilnehmeranschluss erfolgt und ein dort angeschlossenes Endgerät erst nach Auswertung dieses Erkennungssignales die Leitung belegt und damit die gebührenpflichtige Verbindung zustandekommen lässt. Vorraussetzung dafür, dass ein solches Verfahren durchgeführt werden kann, ist, dass in den Endgeräten und in den Netzknoten des Telefonnetzes die notwendigen Signalgeneratoren, Erkennungsschaltungen, Speicher und Verzögerungsglieder vorgesehen und die Programme der vorhandenen Steuerprozessoren entsprechend modifiziert und erweitert werden. Dies erfordert, neben zusätzlichen Bauelementen, Entwicklungs- und Erprobungszeit und stellt einen insgesamt beachtlichen Aufwand dar.

Ein gattungsgemäßes Verfahren ist aus der US-A-4,551,581 bekannt, bei dem nach einer Belegung eines Anschlusses durch ein Endgerät, vor Aussenden einer Wahlinformation, eine in einem Speicher des Endgerätes vorgehaltene oder manuell eingegebene, für das Endgerät typische Dienstekennung an einen zugeordneten Ursprungsnetzknoten des Telefonnetzes übermittelt. Dort wird die Dienstekennung zwischengespeichert und nach Eingang der Wahlinformation an einen durch die Wahlinformation bestimmten Zielknoten übertragen. Der Zielknoten gibt die Dienstekennung nach Aussenden eines ersten Rufsignals oder eines vor dem ersten Rufsignal gesendeten Aufwecksignals als FSK-moduliertes Signal auf den gerufenen Teilnehmeranschluss aus. Über diesen Teilnehmeranschluss vergleichbare Endgeräte vergleichen die empfangene Dienstekennung nach deren Demodulation mit den in ihren Speichern abgelegten Dienstekennungen.

Aus der US-A-4,383,138 ist ebenfalls ein Verfahren zum Übertragen codierter Informationen in einem Telefonnetz bekannt.

Der Erfindung liegt die Aufgabe zugrunde, ein Verfahren bzw. Gerät gemäß der im Oberbegriff der Patentansprüche 1 und 7 angegebenen Art derart weiterzubilden, dass die Möglichkeit geschaffen wird, durch die in der Anrufsignalisierung enthaltenen Informationscodierungen ein geeignetes Endgerät für die Entgegennahme des Anrufes auszuwählen, z. B. bei angekündigter Datenübertragung ein Datenmodum automatisch anzuschalten.

Diese Aufgabe wird durch die Merkmale des kennzeichneten Teils des Patentansprüche 1 und 7 in Verbindung mit seinen Oberbegriffsmerkmalen gelöst.

Die Unteransprüche stellen vorteilhafte Weiterbildungen der Erfindung dar.

Nach der Erfindung werden die über den gerufenen Teilnehmeranschluss erreichbaren Endgeräte bei Übereinstimmung der empfangenen Dienstekennung mit der gespeicherten Dienstekennung aktiv, wobei das in der Dienstekennung enthaltende, FSK-modulierte Signal zusammen mit einer die Rufnummer des anrufenden Teilnehmers und gegebenenfalls weitere Informationen enthaltenden sogenannten CLIP-Informationen für die Übertragung dieser Information vorhandene Einrichtungen an den gerufenen Teilnehmeranschluss übertragen wird.

Das Verfahren nach der Erfindung ist im Patentanspruch 1 wiedergegeben. Es nutzt unter anderem Einrichtungen, die zur Realisierung eines neuen Telefondienstleistungsmerkmals mit der Bezeichnung "CLIP" (Calling Line Identification Presentation) geschaffen wurden oder noch geschaffen werden müssen. CLIP soll bei analog betriebenen Teilnehmeranschlüssen eine Anzeige der Rufnummer des rufenden Teilnehmers beim gerufenen Teilnehmer ermöglichen und wird z. B. im Netz der Deutschen Telekom AG ab 1998 eingeführt werden. Gemäß den Europäischen Normen ETS 300 659-1 und ETS 300 788-1 sieht CLIP während des Verbindungsaufbaus eine Datenübertragung vom Zielnetzknoten zum gerufenen Teilnehmer vor. Diese erfolgt mittels Frequenzumtastung (FSK) im Zeitraum zwischen dem ersten und zweiten Rufsignal, oder, bei Verwendung eines Aufwecksignals (Terminal Equipment Alerting Signal), zwischen diesem und dem ersten Rufsignal und umfasst neben der Nummer des rufenden Teilnehmeranschlusses noch den Anrufstyp (z. B. automatischer Rückruf, Mitteilung, dass Nachrichten für den Teilnehmer vorliegen usw.) und eine Reihe weiterer Parameter. Die übertragenen Daten können nach Demodulation und Decodierung in einer geeigneten Schaltung des Teilnehmerendgerätes, noch vor Entgegennahme des Gespräches auf einem Display angezeigt werden.

Die Übertragung der Dienstekennung vom Zielnetzknoten des Telefonnetzes zum gerufenen Teilnehmeranschluss erfolgt gemäß der Erfindung als FSK-moduliertes Signal, wie die im Rahmen der CLIP-Funktion zu übertragenden Daten. Ein besonderer Demodulator und Decodierer für die Dienstekennung ist deshalb nicht erforderlich. Lediglich die Steuerung zur automatischen Anschaltung oder Aktivierung der am Teilnehmeranschluss angeschlossenen Endgeräte, abhängig von der übertragenen Dienstekennung, muss in den Endgeräten implementiert sein. Bei Zuordnung mehrerer, verschiedener Endgeräte zum selben Teilnehmeranschluss kann die übertragene Dienstekennung auch von der für die Demodulation und Decodierung der CLIP-Information vorhandenen Schaltung eines der Endgeräte, z. B. des Telefonapparates, den anderen Endgeräten zur Verfügung gestellt werden.

Die Übertragung der Dienstekennung vom rufenden Teilnehmeranschluss zum Ursprungsnetzknoten des Telefonnetzes macht Gebrauch von bereits vorhandenen Übertragungsmöglichkeiten und benötigt keine zusätzlichen Tongeneratoren oder Tonfrequenzempfänger wie sie zur Übertragung eines Kennungstones erforderlich wären. Als zusätzliche Einrichtungen müssen lediglich in den Endgeräten Speicher für die jeweilige Dienstekennung, und in den als Ursprungsnetzknoten agierenden Netzknoten gegebenenfalls Speichererweiterungen vorgesehen werden, um eine Zwischenspeicherung der Dienstekennungen bis zu deren Weitergabe nach Eingang der Wahlinformation zu ermöglichen. In den Arbeitsprogrammen der Ursprungsnetzknoten muss außerdem eine Routine zur Behandlung und Weiterübermittlung der von den rufenden Endgeräten übermittelten Dienstekennungen zu den jeweiligen Zielnetzknoten zu einem gewählten Teilnehmeranschluss so modifiziert werden, dass die Dienstekennung neben der CLIP-Information unter Benutzung derselben Einrichtungen übertragen werden kann.

Zudem wird nach der Erfindung die Dienstekennung vom Zielnetzknoten des Telefonnetzes an einen analogen Teilnehmeranschluss zusammen mit der CLIP-Information übertragen. Damit lassen sich Dienstekennung und Rufnummer des rufenden Teilnehmers im selben Datenformat übertragen. Getrennte Datensicherungsmaßnahmen für die Übertragung der Dienstekennung entfallen damit. Die Demodulation und Decodierung kann zusammen mit der der CLIP-Information unter Verwendung derselben Einrichtungen erfolgen. Viele Endgeräte brauchen dann keine eigenen FSK-Demodulatoren und Decoder zu enthalten. Sie können die decodierte Dienstekennung von den entsprechenden Einrichtungen eines am selben Teilnehmeranschluss betriebenen, für CLIP-Übertragung ausgerüsteten Endgerätes übernehmen, was insbesondere für kombinierte Mehrdienst-Endgeräte vorteilhaft ist.

Insbesondere sieht die Verwendung von MFV-Zeichen zur Übertragung der Dienstekennung an den Ursprungsnetzknoten vor. Dies ist deshalb vorteilhaft, weil in Kürze alle Netzknoten mit MFV-Zeichenempfängern ausgestattet sein werden und diese dann auch zum Empfang der Dienstekennung genutzt werden können.

Gemäß einer weiteren Ausgestaltung des Verfahrens nach der Erfindung sieht die Übertragung mehrerer Dienstekennungen einschließlich einer Dienstekennung für Telefondienst vor, wobei Telefondienst insofern Priorität genießt, dass im Störungsfall oder bei Benutzung von Endgeräten, die (noch) keine Dienstekennung übertragen, Telefondienst signalisiert wird.

Eine Variante dieses Verfahrens nach der Erfindung sieht für Telefondienst keine Dienstekennung vor, jedoch die Aktivierung des Telefons am gerufenen Anschluss, wenn mit einem Anruf keine andere Dienstekennung übertragen wird. Auch hier ist es somit möglich, z. B. während einer Übergangszeit, Endgeräte, die noch keine Dienstekennung übertragen, weiterzuverwenden.

Aus MFV-Zeichen gebildete Codes für die einzelnen Dienstekennungen, die sich von sonstiger MFV-codierter Information sicher unterscheiden lassen, sind ebenfalls günstig.

Vorzugsweise wird ein für die Ausführung eines einzelnen Dienstes vorgesehenes Telekommunikations-Endgerät für das Verfahren nach der Erfindung verwendet. Als Schaltung zum Empfang von Dienstekennungen als FSK-modulierte Signale wird vorteilhafterweise dieselbe Schaltung eingesetzt, die auch zum Empfang der CLIP-Information genutzt wird. Zur Ausgabe der eigenen Dienstekennung in Form von MFV-Zeichen dient der zur Erzeugung von Wählzeichen ohnehin vorhandene DTMF-Generator.

Hierbei wird insbesondere ein Endgerät verwendet, dass speziell als Sprachendgerät ausgebildet ist.

Dieses Endgerät kann sowohl so ausgebildet sein, dass es als rufendes Endgerät eine Telefondienstkennung ausgibt oder so, dass es keine solche Ausgabe vorsieht. Für letzteren Fall, kann zusätzlich noch der Speicher für die Telefondienstkennung eingespart und die Aktivierung des Endgerätes davon abhängig sein, dass keine andere Dienstekennung empfangen wurde.

Die Verwendung eines Mehrdienste-Endgerätes weist den Vorteil auf, dass eine Schaltung zum Empfang und zur Decodierung von Dienstekennungen eines Geräteteils, z. B. des Telefons, von den andere Dienste wahrnehmenden Geräteteilen mit genutzt werden kann.

Das Endgeräte weist vorzugsweise eine Schaltung auf, die zum Empfang und zur Decodierung der übermittelten Dienstekennungen in der Weise geeignet ist, dass sie auch die vom Zielnetzknoten übertragenen CLIP-Information empfängt.

Ein Ausführungsbeispiel für das Verfahren nach der Erfindung sowie ein Ausführungsbeispiel für ein zur Verwendung in dem Verfahren nach der Erfindung geeignetes Mehrdienste-Endgerät werden nachfolgend anhand mehrerer Figuren ausführlich beschrieben.

Die Figuren zeigen im einzelnen:
- Fig. 1: ein Ablaufdiagramm einer Fax-Überträgung entsprechend dem Verfahren nach der Erfindung;
- Fig. 2: ein Blockschaltbild eines zur Verwendung in dem Verfahren nach der Erfindung geeignetes Mehrdienste-Endgerätes, und
- Fig. 3a, b: Funktionsabläufe in einem Mehrdienste-Endgerät.

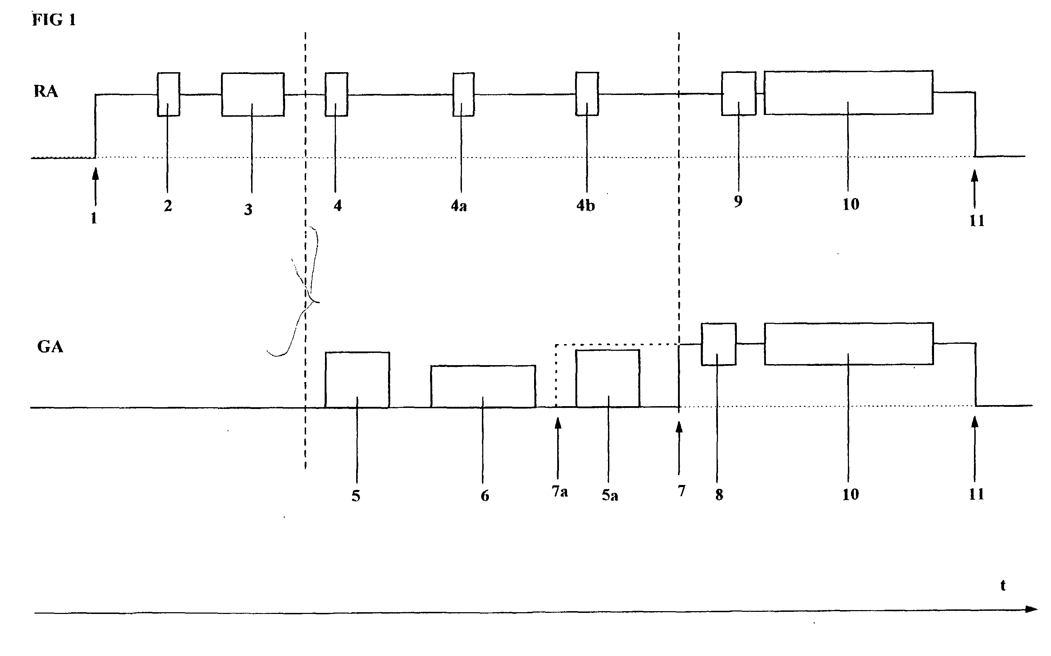

In Fig. 1 sind über eine Zeitachse t, oben der zeitliche Ablauf des Verfahrens nach der Erfindung an einem rufenden analogen Teilnehmeranschluss RA eines Telefonnetzes, darunter der entsprechende Verfahrensablauf an einem vom Teilnehmeranschluss RA gerufenen, gleichartigen Teilnehmeranschluss GA schematisch wiedergegeben. Nachdem ein Teilnehmer am rufenden Anschluss ein dort angeschlossenes Fax-Gerät oder Mehrdienste-Endgerät mit Fax-Funktion durch Einlegen einer zu übermittelnden Vorlage zum Sendebetrieb vorbereitet, die Rufnummer des Zieles eingegeben und den automatischen Ablauf der Fax-Übertragung gestartet hat, belegt das Fax-Gerät zu einem Zeitpunkt 1 die Anschlussleitung und ist dadurch mit der Eingangsstufe des im folgenden als Ursprungsnetzknoten bezeichneten zugehörigen Netzknotens des Telefonnetzes verbunden.

Ist das Fax-Gerät über eine Telekommunikationsanlage (TK-Anlage) an das Telefonnetz angeschlossen, muss zum Belegen einer Anschlussleitung zunächst ein interner Anschluss der TK-Anlage belegt und nach einer kurzen Pause die sogenannte Amtskennziffer (AKZ) ausgesendet werden. Das Fax-Gerät wartet danach eine vorgegebene, auch als Zwischenwahlzeit bezeichnete Zeitspanne oder, sofern es sich um ein Gerät mit Wähltonerkennung handelt, so lange, bis es den Wählton vom Netzknoten erhält, bevor es weitere Schritte zum Verbindungsaufbau (incl. Aussenden der Dienstekennung) auslöst.

Abweichend vom üblichen Ablauf des Verbindungsaufbaues, der als nächstes die Übertragung der vom Teilnehmer eingegebenen Zielrufnummer (Wahlinformation) an den Ursprungsnetzknoten vorsieht, gibt das Fax-Gerät jedoch zu einem Zeitpunkt 2 zunächst seine Dienstekennung, die Kennung für "Fax-Dienst", an den Ursprungsnetzknoten aus. Diese Dienstekennung ist z. B. in einem besonderen Festwertspeicher codiert gespeichert und wird als MFV-Zeichencode der Form *DK#, wobei DK für eine für den jeweiligen Dienst charakteristische, zweistellige Zahl steht, wie eine Wahlinformation und unter Verwendung der für die Übertragung von Wahlinformationen im Endgerät und im Netzknoten vorhandenen Einrichtungen an den Netzknoten ausgegeben. Anhand des verwendeten Codes wird die Dienstekennung im Netzknoten als solche erkannt und zwischengespeichert. erst danach, zum Zeitpunkt 3, überträgt das Endgerät die Wahlinformation, die vom Netzknoten, wie gewöhnlich, zum Aufbau der vom Teilnehmer gewünschten Verbindung verwendet wird.

Die Dienstekennung wird nun, zusammen mit der Wahlinformation, über das Telefonnetz zu einem Zielnetzknoten, dem der gewählte Anschluss zugeordnet ist, weitergereicht und steht dort zur Ausgabe an dem gerufenen Teilnehmeranschluss zur Verfügung.

Diese Ausgabe erfolgt in einem Zeitintervall 6, das zeitlich zwischen einem ersten, zum Zeitpunkt 5 an den gerufenen Anschluss gesendeten, und einem zweiten, zum Zeitpunkt 5a an diesen Anschluss ausgegebenen Rufsignal liegt, in Form von FSK-modulierten Daten. Dies hat den Vorteil, dass Endgeräte, die für den Empfang einer sogenannten CLIP (Calling Line Identification Presentation) -Information ausgerüstet sind, keine zusätzlichen Einrichtungen für dem Empfang der Dienstekennung benötigen, weil die CLIP-Information ebenfalls in der Zeit zwischen den ersten beiden Rufsignalen als FSk-moduliertes Signal an den gerufenen Anschluss übertragen wird und die hierfür vorhandenen Einrichtungen für die Übertragung der Dienstekennung mit genutzt werden können. Besonders einfach wird die Übertragung der Dienstekennung, wenn sie innerhalb des CLIP-Datenformates, das hierfür geringfügig geändert werden muss, erfolgt, da dadurch Übertragungszeit gespart und Maßnahmen zur Datensicherung und Fehlererkennung für beide Informationsarten gemeinsam durchgeführt werden können. Anstatt in der Zeit zwischen den ersten beiden Rufsignalen kann die CLIP-Information und damit auch die Dienstekennung auch im Anschluss an ein besonderes Aufwecksignal, vor Ausgabe des ersten Rufsignals übertragen werden.

Sämtliche an den gerufenen Anschluss angeschlossenen Endgeräte vergleichen nun die über eine eigene Empfangseinrichtung des jeweiligen Endgerätes oder über eine Empfangseinrichtung eines anderen, mit dem gerufenen Anschluss verbundenen, für CLIP-Empfang ausgerüstetes Endgerätes, empfangene Dienstekennung mit der gespeicherten eigenen Dienstekennung. Allein das Fax-Gerät stellt Übereinstimmung fest und schaltet sich automatisch an die Anschlussleitung an. Damit ist die Verbindung zum Zeitpunkt 7 zustandegekommen. Im Prinzip ist dies sogar noch vor dem zweiten Rufsignal 5a zu einem Zeitpunkt 7a möglich.

Mit der Anschlussleitung verbunden empfängt das am gerufenen Anschluss angeschaltete Fax-Gerät jetzt die vom rufenden Fax-Gerät in regelmäßigen Abständen J(zu den Zeiten 4, 4a, 4b usw.) ausgesendeten CNG-Signale. Es erkennt eines oder mehrere dieser Signale als Fax-Geräteabruf und startet zu einem Zeitpunkt 8 die Fax-Übertragungsprozedur, mit der der rufenden Gegenstelle die Verbindungsannahme signalisiert und diese veranlasst wird, zu einem Zeitpunkt 9 sendeseitig mit der Fax-Übertragung zu beginnen. In einem nachfolgenden Zeitraum 10 erfolgt die Übertragung der Dateninformation. Nach deren Beendigung wird zu einem Zeitpunkt 11 die Verbindung ausgelöst.

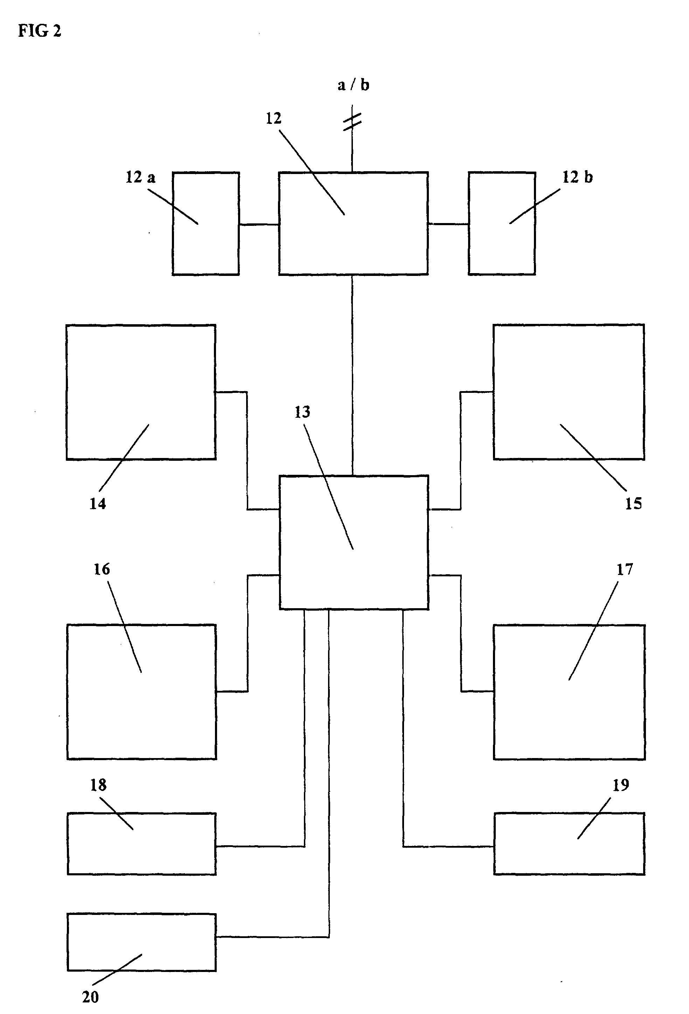

In Fig. 2 ist ein Blockschaltbild eines Mehrdienste-Endgerätes schematisch wiedergegeben. Vier für die Abwicklung unterschiedlicher Dienste vorgesehen Geräteteile, ein Telefonteil 14 mit Sprechschaltung, Hörer und weiteren Telefonfunktionen, ein Anrufbeantworter 15, ein Datenmodem 16 mit PC-Schnittstelle und ein Fax-Geräteteil 17 sind über einen als zentrale Steuereinheit fungierenden Prozessor 13 miteinander und mit zu einer Anschlussleitung a/b führenden Schnittstelle 12 verbunden. Letztere umfasst auch eine Ruferkennungseinrichtung 12a und eine Empfangsschaltung für FSK-modulierte Signale 12b zum Empfang und zur Decodierung von CLIP-Information und vom Zielnetzknoten her übermittelter Dienstekennungen. Die zentrale Steuereinheit hat außerdem Zugriff auf gemeinsame Funktionsbaugruppen wie eine aus Tastatur und Display bestehende Bediener-Schnittstelle 18, einem DTMF-Generator 19 zu Erzeugung von MFV-Zeichen und eine Speichereinheit 20, in der neben Geräteeinstellungen, Zielwahlnummern und anderen Daten den einzelnen Geräteteilen zugeordnete Dienstekennungen unverlierbar gespeichert sind.

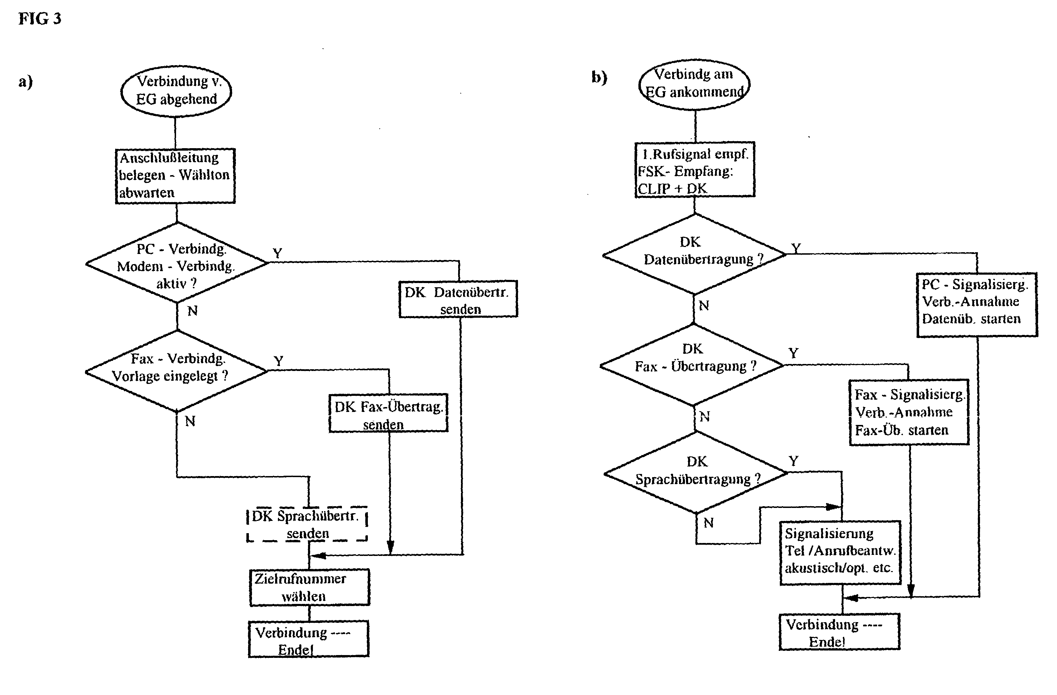

Wird ein solches Mehrdienste-Endgerät gemäß dem Verfahren nach der Erfindung als rufenden Endgerät in Betrieb genommen, so belegt es, wie in Fig. 3a wiedergegeben, zunächst die Anschlussleitung und wartet, sofern es mit Wähltonerkennung ausgestattet ist, den Empfang des Wähltones ab, ansonsten hält es eine vorgegebene Pause ein. Danach stellt die zentrale Steuereinheit fest, welcher Geräteteil aktiviert wurde. Nach Figur 3a prüft die Steuereinheit zunächst das Datenmodem und den mit diesem verbundenen PC auf Vorliegen eines Übertragungswunsches, anschließend den Fax-Geräteteil, ob dieser zum Sendebetrieb vorbereitet ist. Wird ein aktiviertes Geräteteil gefunden, so wird die diesem zugeordnete Dienstekennung aus dem Speicher abgerufen und über den DTMF-Generator auf die Anschlussleitung ausgegeben. Wir kein aktiviertes Geräteteil gefunden, so wird angenommen, dass Telefondienst gewünscht wird, und es wird die für Sprach dienst geltende Dienstekennung oder auch - falls für Telefondienst keine Dienstekennung vorgesehen ist - keine Dienstekennung ausgegeben.

Anschließend an die Ausgabe der Dienstekennung erfolgt auf dem gleichen Wege das Aussenden der Wahlinformation, die aus einem lokalen Rufnummernspeicher abgerufen oder manuell eingegeben wird. Durch die Wahlinformation wird das Telefonnetz veranlasst, die gewünschte Verbindung herzustellen. Bei fehlender dienstespezifischer Zuordnung wird ausschließlich die Wahlinformation ohne vorausgehende Dienstekennung gesendet.

Als gerufenes Endgerät empfängt das Mehrdienste-Endgerät gemäß der Darstellung in Fig. 3b ein erstes Rufsignal und danach die CLIP-Information, die neben anderen Informationen die Nummer des rufenden Anschlusses enthält, zusammen mit einer Dienstekennung. Während die Nummer des rufenden Teilnehmeranschlusses zwischengespeichert und gegebenenfalls im Display angezeigt wird, löst die Dienstekennung eine Suche des zur Kommunikation geeigneten Endgeräteteils durch die Steuereinrichtung aus. Die Steuereinrichtung vergleicht hierzu die empfangene Dienstekennung nacheinander mit der Dienstekennung für Datenübertragung, für Fax-Übertragung und für Sprachübertragung. Je nachdem, welcher Dienst durch die empfangene Dienstekennung signalisiert wird, wird der PC, das Fax-Gerät oder das Telefon mit eventuell vorhandenem Anrufbeantworter aktiviert und, sofern möglich, zur Verbindungsannahme veranlasst. Fehlt die CLIP-Information (FSK-Übertragung) oder eine Dienstekennung oder wird eine fehlerhafte Dienstekennung empfangen, so wird der für Sprachübertragung vorgesehene Geräteteil aktiviert.

### Bezugszeichenliste

- 1: Anschluss RA
- 2: Ursprungsknoten des Telefonnetzes
- 3: Wahlinformation
- 5: erstes Rufsignal
- 6: Teilnehmeranschluss GA

- 12a: Ruferkennungseinrichtung
- 12b: Schaltung
- 13: Schaltung
- 14: Einrichtung
- 15: Einrichtung
- 16: Einrichtung
- 17: Einrichtung
- 18: Bediener-Schnittstelle
- 19: Schaltung
- 20: Speicher

## Patentansprüche

1. Verfahren zur Signalisierung eines Dienstes in Telefonnetzen mit analogen Teilnehmeranschlüssen (RA, GA) und an diese angeschlossenen Engeräten, bei dem nach einer Belegung (1) eines Anschlusses (RA) durch ein Endgerät, vor Aussenden (3) einer Wahlinformation, eine in einem Speicher des Endgerätes vorgehaltene oder manuell eingegebene, für das Endgerät typische Dienstekennung an einen zugeordneten Ursprungsnetzknoten des Telefonnetzes übermittelt (2) dort zwischengespeichert und nach Eingang der Wahlinformation an einen durch die Wahlinformation bestimmten Zielnetzknoten übertragen wird, dass der Zielnetzknoten die Dienstekennung nach Aussenden eines ersten Rufsignals (5) oder eines vor dem ersten Rufsignal gesendeten Aufwecksignals als FSK-moduliertes Signal auf den gerufenen Teilnehmeranschluss (GA) ausgibt (6), und dass über diesen Teilnehmeranschluss erreichbare Endgeräte die empfangene Dienstekennung nach deren Demodulation mit den in ihren Speichern abgelegten Dienstekennungen vergleichen, **dadurch gekennzeichnet, dass** die über dem gerufenen Teilnehmeranschluss (GA) erreichbaren Endgeräte bei Übereinstimmung der empfangenen Dienstekennung mit der gespeicherten Dienstekennung aktiv werden, wobei das die Dienstekennung enthaltende FSK-modulierte Signal zusammen mit einer die Rufnummer des anrufenden Teilnehmers und gegebenenfalls weitere Informationen enthaltenden sogenannten CLIP-Information über die Übertragung dieser Information vorhandene Einrichtungen an den gerufenen Teilnehmeranschluss übertragen wird.

2. Verfahren nach Anspruch 1, **dadurch gekennzeichnet, dass** die Übertragung der Dienstekennung zum Ursprungsnetzknoten mit Hilfe von MFV-Zeichen codiert erfolgt.

3. Verfahren nach Anspruch 1 oder 2, **dadurch gekennzeichnet, dass** zumindest für Telefondienst, Fax-Dienst und Datendienst Dienstekennungen übertragen werden, und dass bei Ausbleiben der Übertragung einer Dienstekennung im Ursprungsnetzknoten die Anschaltung eines für Telefondienst vorgesehenen Endgerätes am Teilnehmeranschluss angenommen und eine entsprechende Dienstekennung zum Zielnetzknoten übertragen wird.

4. Verfahren nach Anspruch 1 oder 2, **dadurch gekennzeichnet, dass** nur für Dienste, die nicht Telefondienst sind, Dienstekennungen übertragen werden, und dass bei Ausbleiben einer Dienstekennung am gerufenen Teilnehmeranschluss die für Telefondienst vorgesehenen Schalthandlungen ausgeführt werden.

5. Verfahren nach einem der vorstehenden Ansprüche, **dadurch gekennzeichnet, dass** die in den Speichern der Endgeräte gespeicherten Dienstekennungen unter Verwendung von MFV-Zeichen codiert, in der Form * DK # an den Ursprungsnetzknoten übertragen werden, wobei "DK" eine beliebige zweistellige, für eine bestimmte Dienstekennung charakteristische Zahl darstellt.

6. Verfahren nach einem der Ansprüche 1 bis 4, **dadurch gekennzeichnet, dass** die in den Speichern der Endgeräte gespeicherten Dienstekennungen unter Verwendung von MFV-Zeichen codiert, in der Form * DM k # an den Ursprungsknoten übertragen werden, wobei "DM" eine beliebige zweistellige Kennzahl für Dienstekennung allgemein und "k" eine Kennziffer für den jeweiligen Dienst darstellt.

7. Telekommunikationsendgerät zur Durchführung des Verfahrens gemäß einem der vorangehenden Ansprüche mit einem Speicher zur Vorhaltung einer eigenen Dienstekennung, einer Schaltung zur Ausgabe dieser Dienstekennung, einer Schaltung zum Empfang einer übermittelten fremden Dienstekennung und einer Schaltung zum Vergleich der empfangenen fremden Dienstekennung mit der gespeicherten eigenen Dienstekennung, **dadurch gekennzeichnet, dass** das Steuerungsprogramm des Endgerätes für den Ruf und den Zustand unmittelbar nach Belegung einer Anschlussleitung die Ausgabe der eigenen Dienstekennung und für den gerufenen Zustand nach Empfang einer fremden Dienstekennung ein Vergleich dieser Dienstekennung mit der eigenen Dienstekennung vorsieht und die Annahme einer Verbindung und/oder andere für den jeweiligen Dienst vorgesehene Schalthandlungen in Abhängigkeit von einer Übereinstimmung der beiden Dienstekennungen miteinander veranlasst, und dass die Schaltung zum Empfang der übermittelten fremden Dienstekennung auch für den Empfang von CLIP-Informationen eingerichtet und vorgesehen ist.

8. Telekommunikationsendgerät nach Anspruch 7, **gekennzeichnet durch** eine Ausbildung als Sprachendgerät, wobei die Schaltung zum Empfang der fremden Dienstekennung auch zur Dekodierung einer in Form von FSK-modulierten Daten übermittelten fremden Dienstekennung ausgebildet ist.

9. Telekommunikationsendgerät nach Anspruch 7, **gekennzeichnet durch** eine Ausbildung zur Wahrnehmung unterschiedlicher Dienste mit einem Speicher zur Vorhaltung der für die einzelnen, von ihm ausführbaren Dienste charakteristischen Dienstekennungen, wobei das Steuerungsprogramm des Endgerätes für den gerufenen Zustand, unmittelbar nach Belegung einer Anschlussleitung, die Ausgabe der für den aktuell auszuführenden Dienst charakteristischen, gespeicherten Dienstekennung und für den gerufenen Zustand, nach Empfang einer fremden Dienstekennung, ein Vergleich dieser Dienstekennung mit den gespeicherten Dienstekennungen vorsieht und die Annahme einer Verbindung und/oder andere, für den **durch** die fremde Dienstekennung bezeichneten Dienst vorgesehene Schalthandlung in Abhängigkeit von einer Übereinstimmung der fremden Dienstekennung mit einer der gespeicherten Dienstekennungen **durch** einen den **durch** die fremde Dienstekennung bezeichneten Dienst ausführenden Geräteteil veranlasst.

## Claims

1. Method for signalling a service in telephone networks with analog subscriber lines (RA, GA) and thereto connected terminal devices wherein, after seizure (1) of a line (RA) by a terminal device, prior to the transmission (3) of dialling information, a service code held in a memory of the terminal device or manually entered and typical of the terminal device is sent (2) to an associated originating network node of the telephone network, is intermediately stored there and is transmitted after receipt of the dialling information to a destination network node determined by the dialling information, wherein, after transmission of a first call signal (5) or a wake-up signal transmitted before the first call signal, the destination network node outputs (6) the service code in the form of an FSK-modulated signal to the called subscriber line (GA), wherein terminal devices reachable through said subscriber line compare the received service code after demodulation thereof with the service codes stored in their memories, **characterized in that** the terminal devices reachable through the called subscriber line (GA) become active if the received service code agrees with the stored service code, wherein the FSK-modulated signal containing the service code is transmitted - together with so-called CLIP information containing the call number of the calling subscriber and possibly further information - via the transmission of said information existing means to the called subscriber line.

2. Method according to claim 1, **characterized in that** the transmission of the service code to the originating network node is effected in coded form using DTMF characters.

3. Method according to claim 1 or 2, **characterized in that** service codes are transmitted at least for telephone service, fax service and data service, wherein, if no service code is transmitted, the originating network node assumes the activation on the subscriber line of a terminal device intended for telephone service and a corresponding service code is transmitted to the destination network node.

4. Method according to claim 1 or 2, **characterized in that** service codes are transmitted only for services which are not telephone service, wherein, if a service code is not transmitted, those switching actions intended for telephone service are executed on the called subscriber line.

5. Method according to any one of the preceding claims, **characterized in that** the service codes stored in the memories of the terminal devices are transmitted in coded form using DTMF characters, in the form * DK # to the originating network node, "DK" representing any two-digit number characteristic of a certain service code.

6. Method according to any one of claims 1 to 4, **characterized in that** the service codes stored in the memories of the terminal devices are transmitted in coded form using DTMF characters, in the form * DM k # to the originating node, "DM" representing any two-digit code number for service code in general and "k" representing a code number for the respective service.

7. Telecommunications terminal device for implementation of the method according to any one of the preceding claims with a memory for holding an internal service code, a circuit for outputting said service code, a circuit for receiving a transmitted external service code and a circuit for comparing the received external service code with the stored internal service code, **characterized in that**, for the calling state and the state immediately after seizure of an access line, the control program of the terminal device provides for the output of the internal service code and, for the called state, said control program provides, after reception of an external service code, for a comparison of said service code with the internal service code, said control program causing acceptance of a call and/or other switching actions envisaged for the respective service depending on agreement between the two service codes, wherein the circuit for receiving the transmitted external service code is set up and provided also for receiving CLIP information.

8. Telecommunications terminal device according to claim 7, **characterized by** a design in the form of a voice terminal device, the circuit for receiving the external service code also being designed to decode an external service code transmitted in the form of FSK-modulated data.

9. Telecommunications terminal device according to claim 7, **characterized by** a design for performing different services with a memory for holding the service codes characteristic of the individual services which can be executed by the device, wherein, for the called state, immediately after seizure of an access line, the control program of the terminal device provides for the output of the stored service code characteristic of the service currently to be executed and, for the called state, said control program provides, after reception of an external service code, for a comparison of said service code with the stored service codes, said control program causing a call and/or other switching action envisaged for the service identified by the external service code, depending on agreement between the external service code and one of the stored service codes, to be accepted by a device part executing the service identified by the external service code.

## Revendications

1. Procédé de signalisation d'un service dans des réseaux téléphoniques avec lignes d'abonnés analogiques (RA, GA) et équipements terminaux leur étant raccordés, dans lequel, après affectation (1) d'un équipement terminal à une ligne (RA) et avant émission (3) d'une information de sélection, un indicatif de service typique de l'équipement terminal, stocké dans une mémoire de l'équipement terminal ou sélectionné manuellement, est transmis (2) à un noeud d'origine dédié du réseau téléphonique, y est temporairement stocké et, après arrivée de l'information de sélection, est transmis à un noeud de réseau de destination déterminé par l'information de sélection, tel que le noeud de réseau d'arrivée émet (6) l'indicatif de service comme signal modulé MDF sur la ligne d'abonné appelée (GA) après émission d'un premier signal d'appel (5) ou d'un signal de réveil envoyé avant le premier signal d'appel et tel que les équipements terminaux joignables à partir de cette ligne d'abonné comparent l'indicatif de service reçu, après sa modulation, avec les indicatifs de services stockés dans leurs mémoires, **caractérisé en ce que** les équipements terminaux joignables à partir de la ligne d'abonné (GA) appelée entrent en action lorsqu'il y a concordance entre l'indicatif de service reçu et l'indicatif de service stocké, le signal modulé en MDF contenant l'indicatif de service étant transmis à la ligne d'abonné appelée avec une information dite CLIP sur la transmission de cette information, contenant le numéro de l'abonné appelant et, le cas échéant, d'autres informations.

2. Procédé selon la revendication 1, **caractérisé en ce que** la transmission de l'indicatif de service vers le noeud de réseau d'origine se fait avec codage par signalisation en fréquences vocales.

3. Procédé selon l'une des revendications 1 ou 2, **caractérisé en ce que** des indicatifs de services sont au moins transmis pour le service téléphonique, le service de télécopie et le service de données et **en ce que**, au cas où un indicatif de service ne serait pas transmis dans le noeud de réseau d'origine, l'activation d'un équipement terminal prévu pour le service téléphonique est acceptée et un indicatif de service correspondant est transmis au noeud de réseau de destination.

4. Procédé selon l'une des revendications 1 ou 2, **caractérisé en ce que** des indicatifs de services ne sont transmis que pour les services autres que le service téléphonique et que, lorsqu'aucun indicatif de service ne parvient à la ligne d'abonné appelée, les opérations de connexion prévues pour le service téléphonique sont effectuées.

5. Procédé selon l'une des revendications précédentes, **caractérisé en ce que** les indicatifs de services stockés dans les mémoires des équipements terminaux sont codés en fréquences vocales et transmis au noeud d'origine sous la forme* DK #, « DK » représentant une séquence de deux chiffres quelconques caractérisant un indicatif de service déterminé.

6. Procédé selon l'une des revendications précédentes, **caractérisé en ce que** les indicatifs de services stockés dans les mémoires des équipements terminaux sont codés en fréquences vocales et transmis au noeud d'origine sous la forme* DM k #, « DM » représentant une séquence de deux chiffres quelconques caractérisant d'une manière générale un indicatif de service et « k » un chiffre pour le service concerné.

7. Equipement terminal de télécommunications destiné à l'application du procédé décrit dans l'une des revendications précédentes, comprenant une mémoire pour le stockage d'un indicatif de service propre, un dispositif de connexion pour l'émission de cet indicatif de service, un dispositif de connexion pour la réception d'un autre indicatif de service ayant été transmis et un dispositif de connexion pour la comparaison des indicatifs de services reçus avec le propre indicatif de service stocké, **caractérisé en ce que** le programme de commande de l'équipement terminal prévoit, pour l'appel et l'état suivant immédiatement l'occupation d'une ligne de raccordement, l'émission du propre indicatif de service et, pour l'état « appelé » après réception d'un autre indicatif de service, une comparaison de cet indicatif de service avec le propre indicatif de service et déclenche l'acceptation d'une liaison et/ou d'autres opérations de connexion prévues pour le service concerné s'il y a concordance entre les deux indicatifs de services, et **en ce que** la connexion pour la réception de l'indicatif de service transmis est également établie et prévue pour la réception d'informations CLIP.

8. Equipement terminal de télécommunications selon la revendication 7, **caractérisé par** une configuration comme équipement terminal vocal, le dispositif de connexion permettant la réception de l'indicatif de service externe étant aussi conçu pour le décodage d'un indicatif de service externe transmis sous forme de données modulées en MDF.

9. Equipement terminal de télécommunications selon la revendication 7, **caractérisé par** une configuration permettant l'utilisation de différents services avec une mémoire où sont stockés les indicatifs de services caractéristiques des différents services qu'il est en mesure de réaliser, le programme de commande de l'équipement terminal prévoyant, pour l'état « appelé », immédiatement après l'occupation d'une ligne de raccordement, l'émission de l'indicatif de service stocké caractérisant le service à activer, et pour l'état « appelé », après réception d'un indicatif de service externe, une comparaison de cet indicatif de service avec l'indicatif de service stocké, et déclenchant, au niveau de la partie de l'équipement réalisant le service correspondant à l'indicatif de service externe, l'acceptation d'une liaison et/ou d'autres opérations de connexion prévues pour le service correspondant à l'indicatif de service externe s'il y a concordance entre l'indicatif de service externe et l'un des indicatifs de services stockés.
